# EUROPEAN PATENT APPLICATION

(11) **EP 4 838 519 A1**
(43) Date of publication of application: **11.11.2026**
(21) Application number: 26176875.8
(22) Date of filing: 06.05.2026
(51) Int. Cl.: G10L 15/00, G06F 21/62, G06F 40/30, G06N 3/08, G06N 20/00, G10L 15/22

(54) **SYSTEMS AND METHODS FOR LIMITING APPLICATION INTERFACE PROGRAMMING ( API ) PROCESSING CALLS BY CONVERSATIONAL AGENTS**

(30) Priority: 08.05.2025 US 202563802490 P; 19.05.2025 US 202519212625
(71) Applicant: Capital One Services, LLC, McLean, Virginia 22102 (US)
(72) Inventor: WINATA, Genta, McLean, VA 22102 (US); DAS, Anirban, McLean, VA 22102 (US); DASHORE, Paresh, McLean, VA 22102 (US); NAPHADE, Milind, McLean, VA 22102 (US); SAHU, Sambit, McLean, VA 22102 (US); ZHANG, Shixiong, McLean, VA 22102 (US); BALASUBRAMANIAM, Kartik, McLean, VA 22102 (US); BATHAEE, Nadia, McLean, VA 22102 (US); MEHTA, Aashay Pinkesh, McLean, VA 22102 (US); JAIN, Anmol, McLean, VA 22102 (US); CHAKRABORTY, Amartya, McLean, VA 22102 (US)
(74) Representative: Boult Wade Tennant LLP

(57) **Abstract**

Systems and methods for reducing the reliance on API calls and thus mitigating the technical challenges and problems related to their use. For example, the system first determines a first API requirement likelihood based on the analysis of the first user request. By evaluating the content, intent, and complexity of the user's input, the system can predict how likely it is that fulfilling the request will require an external API call and response cycle. This likelihood score, known as the first API requirement likelihood, quantifies the necessity of engaging external services to satisfy the user's needs.

## Description

### CROSS-REFERENCE TO RELATED APPLICATIONS

This application claims the benefit of priority of U.S. Provisional Application No. 63/802,490, filed May 8, 2025 and U.S. Non-Provisional Application No. 19/212,625, filed May 19, 2025. The content of the foregoing applications is incorporated herein in its entirety by reference.

### BACKGROUND

Conversational agents use application programming interface ("API") calls to extend their capabilities beyond basic dialogue generation by interacting with external systems, services, or databases. When a user provides a query or command that requires information retrieval, action execution, or integration with another platform, the conversational agent can formulate and send an API call to the appropriate external service. This process may involve the agent packaging a request in the required API format-specifying the endpoint, method (such as GET, POST, PUT, or DELETE), and necessary parameters or payloads-based on the user's input and the service's specifications. Upon sending the API call over the network, the agent waits for a response, which might include data, confirmation of an action, or an error message. Once the response is received, the conversational agent processes the information and integrates it back into the conversation flow, either by presenting the results to the user, taking further action, or prompting for additional input. This approach allows conversational agents to perform complex tasks such as booking appointments, fetching real-time data (like weather or stock prices), processing transactions, or managing user accounts, thereby creating a seamless, interactive experience that bridges natural language interaction with functional system operations.

### SUMMARY

However, using API calls in conversational agents introduces several technical challenges and problems that must be carefully managed to ensure a smooth user experience. One major challenge is latency, as API calls depend on network communication and external server responsiveness, which can introduce noticeable delays in the conversational flow if not optimized or handled asynchronously. Error handling is another critical issue-APIs can fail for various reasons, such as server downtime, invalid parameters, authentication failures, rate limiting, or unexpected response formats, requiring the agent to be robust in detecting, recovering from, and communicating errors gracefully. Security and privacy also pose significant concerns; API calls often transmit sensitive user data, necessitating strong encryption practices, secure authentication protocols like OAuth, and careful management of API keys and tokens to prevent unauthorized access or data leaks. Furthermore, schema changes in external APIs-such as modifications to endpoints, parameters, or response structures-can break conversational agent functionality unless versioning strategies or dynamic adaptation techniques are implemented. Dependency management adds another layer of complexity, as relying heavily on third-party services introduces risks tied to the external provider's reliability and policy changes. Lastly, rate limits enforced by APIs can restrict the number of calls within a given time frame, forcing conversational agents to implement throttling, caching, or queuing mechanisms to stay within allowable usage thresholds while maintaining a responsive user interaction. Addressing these challenges requires a combination of architectural foresight, resilient programming practices, and continuous monitoring.

Accordingly, systems and methods are described herein for novel uses and/or improvements to conversational agents. As one example, systems and methods are described herein for reducing the reliance on API calls and thus mitigating the technical challenges and problems related to their use. For example, the aforementioned technical challenges and problems can be effectively solved or mitigated by a system that first determines a first API requirement likelihood based on the analysis of the first user request. By evaluating the content, intent, and complexity of the user's input, the system can predict how likely it is that fulfilling the request will require an external API call and response cycle. This likelihood score, known as the first API requirement likelihood, quantifies the necessity of engaging external services to satisfy the user's needs. The system then compares this likelihood against a predefined first API requirement threshold to decide whether proceeding with an API call is warranted. If the likelihood exceeds the threshold, the system initiates one or more API calls; if not, it may rely on cached data, internal logic, or defer the action to reduce unnecessary network overhead. This selective strategy helps mitigate latency by avoiding needless API calls, enhances reliability by reducing dependence on potentially unstable external services, and optimizes resource usage within API rate limits. Moreover, by predicting when an API call is truly necessary, the system can preemptively allocate resources for error handling, security checks, and fallback responses, thus creating a more resilient, efficient, and responsive conversational experience. This intelligent decision-making framework significantly reduces the exposure to API-related technical risks while maintaining a high-quality user interaction.

In some aspects, systems and methods are described for mitigating data leakage due to application interface programming ("API") processing calls across a computer network by locally-implemented conversational agents. For example, the system may receive, via a user interface implemented on a local device, a first user request comprising a first utterance for processing. The system may determine a first API data security confidence based on the first user request. The system may compare the first API data security confidence to a first API data security threshold. The system may, in response to determining that the first API data security confidence does not correspond to the first API data security threshold, determine first cache content based on the first utterance and storing the first cache content in a memory cache. The system may generate for display, in the user interface, a first conversational response. The system may receive, via the user interface, a second user request comprising a second utterance. The system may retrieve the first cache content from the memory cache. The system may determine a second API data security confidence based on the second user request and the first cache content. The system may compare the second API data security confidence to the first API data security threshold. The system may, in response to determining that the second API data security confidence corresponds to the first API data security threshold, generate a first API call. The system may receive a first API response in response to the first API call. The system may generate for display, in the user interface, a second conversational response based on the first API response.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for implementing a conversational interaction, in accordance with one or more embodiments.
FIG. 2 shows an illustrative diagram for a conversational interaction, in accordance with one or more embodiments.
FIG. 3 shows illustrative components for a system used to limit API processing calls, in accordance with one or more embodiments.
FIG. 4 shows a flowchart of the steps involved in limiting API processing calls during conversational interactions, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

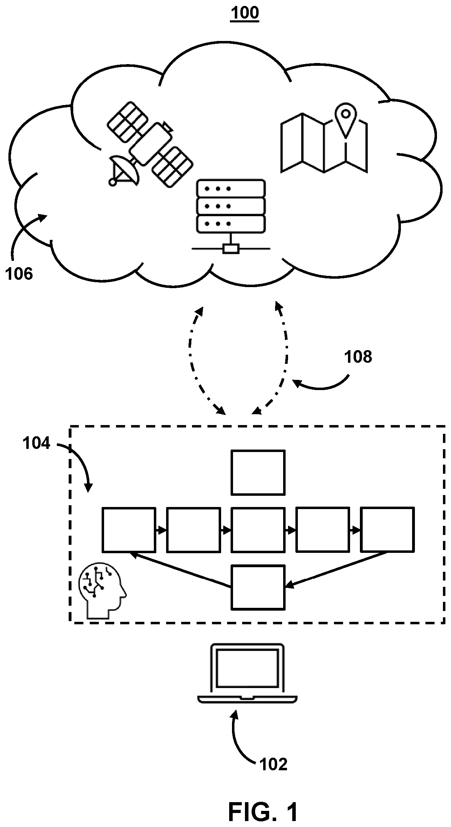

FIG. 1 shows an illustrative diagram for implementing a conversational interaction, in accordance with one or more embodiments. FIG. 1 shows system 100, an advanced AI-powered agentic workflow system designed to solve complex multi-domain planning problems. System 100 includes user interface 102. A user interface (UI) is the point of interaction between a human user and a computer system, software application, or device. It encompasses all the elements that enable a user to communicate with and control the system, such as screens, buttons, icons, input fields, menus, and other visual or tactile components. The primary goal of a user interface is to facilitate efficient and intuitive interaction, allowing users to perform tasks, access information, and receive feedback from the system. User interfaces can be graphical (GUIs), which rely on visual elements like windows and icons, or they can be command-line interfaces (CLIs), which require users to type text commands. With the rise of modern technology, UIs also include voice-based interfaces, gesture-based interactions, and even conversational interfaces powered by AI. A well-designed user interface is crucial for ensuring usability, enhancing user satisfaction, and improving overall productivity when using digital tools or systems.

As shown in FIG. 1, user interface 102, depicted as a laptop, serves as the entry point for user interactions. Through this interface, users initiate conversations and provide input that drives the system's decision-making process. A conversational interaction may refer to an exchange of information between a user and a system that mimics natural human dialogue. This type of interaction typically occurs through spoken or written language and is designed to be intuitive and engaging, allowing users to communicate their needs, ask questions, or issue commands in a conversational manner. Conversational interactions are often facilitated by technologies such as chatbots, voice assistants, or AI-powered agents, which use natural language processing (NLP) and understanding to interpret user input and generate appropriate responses. These interactions can be text-based, like in messaging apps, or voice-based, as with smart speakers and virtual assistants. The goal of conversational interaction is to make technology more accessible and human-like by reducing the complexity of traditional user interfaces and enabling a more fluid, natural user experience.

System 100 may use planning function 104, enclosed in a dashed box, symbolizing the core AI planning engine. This function acts as a multi-stage, tool-driven conversational agent capable of orchestrating interdependent actions across multiple domains. The planning function is visually represented by interconnected rectangular modules-suggesting distinct stages such as information seeking, planning, evaluation, execution, and response generation.

Planning function 104 may access a memory cache during planning. A memory cache may be a high-speed data storage layer that temporarily holds frequently accessed or recently used information to improve overall system performance. Located closer to the processor than main memory (RAM), a cache allows faster access to critical data, reducing the time needed for the system to fetch information from slower memory sources. Caches are often used in various levels within computer architectures, such as CPU caches (L1, L2, and L3) that store instructions and data for quick retrieval, or in software applications to store temporary results that may be reused, such as web page elements, database queries, or API responses. By storing data that is likely to be requested again, a memory cache helps minimize latency and reduces the load on the main data source, leading to more efficient system operations. Intelligent caching strategies can also determine which data to keep, replace, or discard based on usage patterns, maximizing the effectiveness of limited cache storage space.

Planning function 104 may use a memory cache to limit the number, frequency, and/or size of API calls and responses (e.g., to data source 106) needed during the conversational interaction. Planning function 104 may use a memory cache to optimize the efficiency and performance of conversational interactions by limiting the number, frequency, and size of API calls and responses to data sources such as data source 106. During the planning and execution stages, the system can store results from previous API calls in a local cache, allowing it to quickly retrieve relevant information without repeatedly querying external data sources. This is particularly useful in multi-step workflows or when handling repetitive or related user queries, as it avoids redundant data retrieval and reduces network latency. The memory cache can hold both raw data and filtered results, enabling planning function 104 to reuse previously acquired information in future tool calls or to refine the data for more specific tasks without initiating new API requests. Additionally, caching can help manage bandwidth and reduce computational load on external systems by controlling the volume and frequency of outgoing requests. By leveraging this strategy, planning function 104 ensures more responsive and resource-efficient interactions, particularly in complex, multi-domain planning scenarios where data access costs and delays could otherwise hinder the user experience.

An API call and request may refer to the process by which one software system communicates with another to access data or perform a specific function. An API acts as a set of rules and protocols that allow different software applications to interact. When a program needs to retrieve information or initiate an action from another service-such as a weather database, payment gateway, or data source like 106-it sends an API request. This request typically includes the desired endpoint, the method (such as GET for retrieving data or POST for sending data), and any necessary parameters or authentication credentials. The receiving system processes the request, performs the specified action, and returns a response, which may contain data, status codes, or confirmation of success or failure. API calls are essential for enabling modular, scalable, and interconnected software systems, as they allow components to exchange information efficiently and in real-time without needing to understand each other's internal workings.

Data sources 106 may comprise a wide range of external data that system 100 and/or planning function 104 can access via API calls (illustrated by the bidirectional dashed line 108). This connection allows the planner to retrieve relevant information dynamically from multiple domains such as geographic, server-based, or sensor-based data repositories.

System 100 supports dynamic replanning using a caching mechanism that functions both as a memory and as a tool itself. When data is retrieved or when existing results need filtering, the cache is invoked to avoid redundant computations. The planner uses decoder-based large language models to construct plans through autoregressive decoding, enabling flexible and context-aware planning. Each plan consists of tool calls, where each tool includes the business logic necessary to perform specific actions (e.g., searching a flight in a travel database). Overall, the diagram visually encapsulates how user input flows through a multi-stage AI planning system that dynamically interacts with various data sources to generate, evaluate, execute, and return a final response.

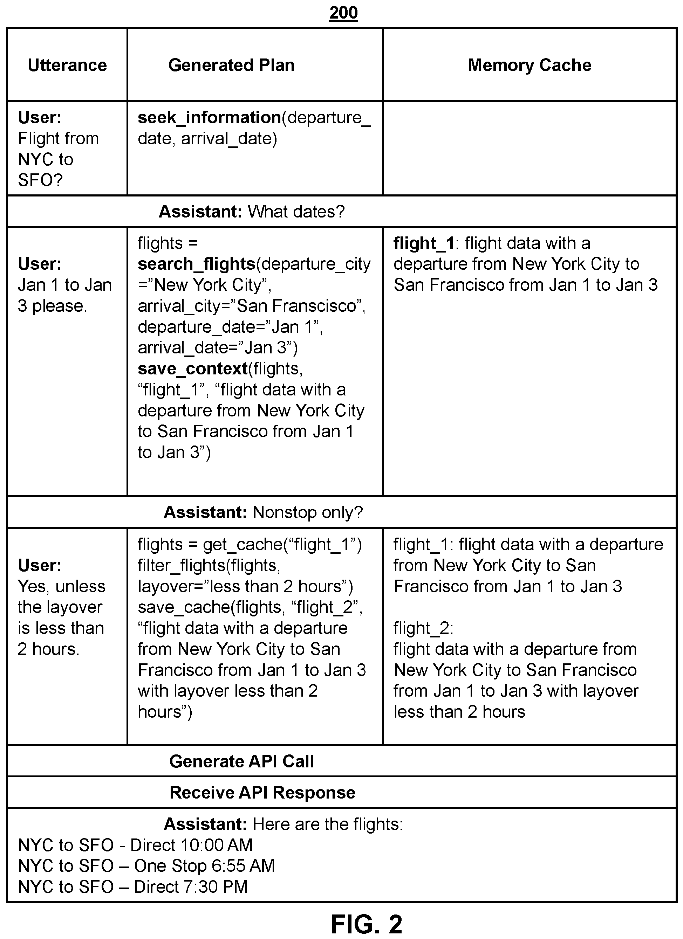

FIG. 2 shows an illustrative diagram for a conversational interaction, in accordance with one or more embodiments. FIG. 2 shows table 200. Table 200 may illustrate how a caching mechanism is used by the system. When a user asks for a specific flight with adequate information, the system may call search_flights and save_cache to save the extracted data to the memory cache. The system may then reuse the data as needed (e.g., via a get_cache action). For example, table 200 illustrates how a caching mechanism is employed within a system to optimize data retrieval and minimize redundant API calls during a conversational interaction. The table is divided into three columns: Utterance, Generated Plan, and Memory Cache. It walks through a dialogue scenario where a user requests flight information from New York City (NYC) to San Francisco (SFO). In response to the initial vague query, the system identifies missing parameters (departure and arrival dates) and initiates a seek_information plan. Once the user provides specific dates-January 1 to January 3-the system executes a search_flights function with the provided parameters and stores the retrieved data into the memory cache using save_context, labeled as flight_1.

The next user utterance includes a preference for flights that are either nonstop or have layovers of less than two hours. Rather than making a new API call, the system retrieves the previously stored data using get_cache("flight_1"), applies a filter_flights operation based on the layover condition, and then stores the filtered results in the cache again under the label flight_2. This reuse of cached data avoids unnecessary external queries, highlighting the efficiency of the caching mechanism.

Finally, based on the filtered and cached data, the system generates an API call and receives a response with specific flight options, which it presents to the user. These results include both direct and one-stop flights, filtered according to the specified layover condition. In table 200, the system demonstrates an incremental and context-aware approach to accumulating information before determining when an API call is necessary to respond to the user. Initially, when the user poses a general query-such as asking for flights from NYC to SFO-the system recognizes that essential details are missing, specifically the departure and arrival dates. At this stage, rather than immediately issuing an API call, the system generates a seek_information plan to prompt the user for the required data. Once the user provides the missing information (e.g., "Jan 1 to Jan 3"), the system uses this input to execute a search_flights function and temporarily stores the resulting flight data in the memory cache (flight_1).

As the interaction continues and the user refines the query-for instance, by specifying a preference for flights with layovers shorter than two hours-the system does not make another external request. Instead, it retrieves the previously cached data using get_cache, applies the necessary filter using filter_flights, and saves the refined results back into the cache as flight_2. Only after the relevant constraints have been fully defined and the refined dataset is prepared does the system determine that sufficient information has been gathered to warrant generating an API call. This call is then made to retrieve specific flight options that satisfy the user's constraints. The system then receives the API response and communicates the available flights to the user. This staged accumulation of data ensures that API calls are made only when absolutely necessary, optimizing system performance and responsiveness.

The system employs an incremental and context-aware approach to reduce reliance on API calls by intelligently assessing the necessity of external requests throughout the conversational interaction. Rather than executing API calls at the first sign of user input, the system begins by analyzing the content, intent, and complexity of the initial request to compute a "first API requirement likelihood"-a metric that quantifies how essential it is to involve an external service to fulfill the request. This likelihood is then compared against a predefined threshold. If the likelihood surpasses the threshold, the system proceeds to initiate one or more API calls. Otherwise, it may choose to defer the call and instead use cached data, apply internal logic, or continue gathering additional user inputs to reduce unnecessary communication with external systems.

This selective, threshold-based strategy helps address multiple technical challenges associated with API usage. It mitigates latency by avoiding premature or redundant API calls, enhances system robustness by reducing dependence on potentially unstable external services, and ensures compliance with API rate limits to prevent throttling or service disruptions. Additionally, by evaluating when API calls are truly warranted, the system can proactively allocate resources for error detection, security validation, and fallback handling mechanisms-leading to a more resilient and secure interaction pipeline. This approach also conserves computational and network resources, ensuring the system remains responsive even under complex multi-turn interactions. Ultimately, the intelligent decision-making framework enables the system to deliver efficient, high-quality user experiences while minimizing exposure to the risks and inefficiencies typically associated with external API integrations. Overall, table 200 demonstrates how intelligently managing cached information throughout the planning process allows the system to handle user constraints efficiently while reducing system overhead and latency associated with repeated API calls.

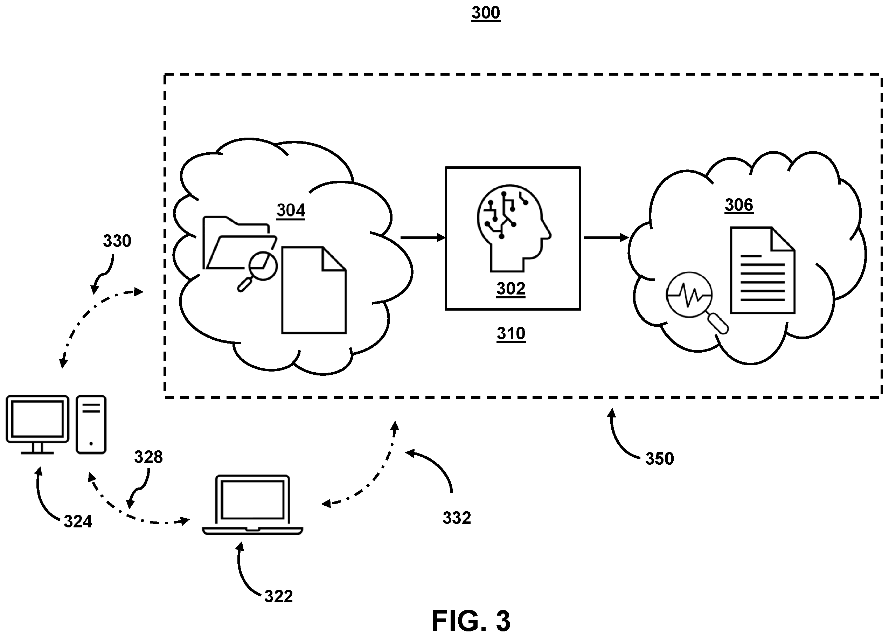

FIG. 3 shows illustrative components for a system used to limit API processing calls, in accordance with one or more embodiments. For example, FIG. 3 may show illustrative components for limiting API processing calls during conversational interactions. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

In some embodiments, system 300 and/or one or more models herein may be implemented using an application specific integrated circuit. An integrated circuit may be a small electronic device made of semiconductor material, typically silicon, that contains a large number of microscopic electronic components such as transistors, resistors, capacitors, and diodes. These components are interconnected to perform a specific function or set of functions. Integrated circuits can be classified into various types based on their functionality, such as analog, digital, and mixed-signal ICs. The transistors within an IC are the primary building blocks, as they act as switches or amplifiers for electronic signals. The other components, like resistors and capacitors, are used for controlling voltage, current, and timing within the circuit. System 300 may design the integrated circuit to be application specific such that design of the circuit is customized for a given application. In some embodiments, system 300 may use an integrated circuit system where one or more integrated circuit are spread throughout a system, network, and/or one or more devices. In such case, the system design may ensure that the circuits are integrated with other electronic components like connectors, power supplies, and sensors to form a complete and functional electronic system. This integration allows for the implementation of sophisticated tasks in devices needed for one or more specified applications.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include model 302, which may be a machine learning model, artificial intelligence model, etc. (which may be referred collectively as "models" herein). In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results.

Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., whether an API call is needed).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors be sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., whether an API call is needed).

In some embodiments, the model (e.g., model 302) may automatically perform actions based on outputs 306. In some embodiments, the model (e.g., model 302) may not perform any actions. The output of the model (e.g., model 302) may be used to determine whether an API call is needed.

In some embodiments, the system may use an AI model to determine whether an API call is needed by analyzing the user's input and evaluating the context of the conversation to assess the necessity and potential value of retrieving external data. The AI model, typically based on a machine learning or transformer architecture such as a large language model (LLM), is trained to recognize patterns, intent, and informational gaps in user queries. When a user submits a request, the model processes the input using natural language understanding techniques to identify key elements such as the presence of explicit data requirements, ambiguity, or missing parameters. Based on this analysis, the model generates a prediction or likelihood score indicating whether the request can be satisfied using internal logic or cached information, or if an API call to an external data source is required. This decision-making process enables the system to balance responsiveness with resource efficiency by avoiding unnecessary API usage.

To train such a model, developers typically use supervised learning with a labeled dataset comprising historical user interactions annotated with whether an API call was ultimately required. This dataset may include examples of various request types, user intents, contextual follow-ups, and the corresponding system actions. Features extracted from the training data-such as token sequences, semantic embeddings, conversation history, and metadata-are used to teach the model how to associate certain linguistic and contextual cues with the need for external data retrieval. The model may also be fine-tuned on specific domains to improve accuracy and generalization. Through iterative training and validation, the model learns to generalize across diverse scenarios, enabling it to make real-time predictions about API necessity with high precision. This intelligent mediation between internal processing and external data calls enhances both system efficiency and the quality of user interactions.

In some embodiments, the system may generate predictions related to financial services. For example, the system may use one or more models and/or application to process a variety of data to generate predictions for tasks such as payment card eligibility determinations, fraud detection, and/or determining rates for auto-finance applications. For credit card eligibility, the model may use data such as the applicant's credit score, income, employment history, debt-to-income ratio, and past credit history. This data helps the model predict the likelihood of the applicant repaying the credit card debt. For fraud detection, models analyze transaction data, including the amount, location, frequency, and pattern of transactions. They compare these patterns to known fraudulent behavior to identify potentially fraudulent activities. For determining auto-finance rates, models might use the applicant's credit score, loan amount, loan term, vehicle details, and market interest rates. The data used by these models comes from various sources, including credit bureaus, financial institutions, customer-provided information, transaction records, and public records. By analyzing these data points, models can make informed predictions and decisions that help financial institutions manage risk, provide appropriate services, and enhance customer satisfaction.

In some embodiments, the model may process received data through several stages. For example, the model may collect and aggregate data from various sources (e.g., a user account, industry data, third-party data sources, etc.). The system may ensure the data is cleaned and preprocessed to handle any missing and/or inconsistent information. This preprocessing may include normalizing numerical data, encoding categorical variables, and applying techniques to handle outliers. The model may then use feature engineering to identify and create relevant features that can improve its predictive power. For instance, the system may derive new variables from existing ones, such as calculating the debt-to-income ratio from debt and income data.

Once the data is prepared, the system feeds the data into the model, which could be an artificial intelligence algorithm such as logistic regression, decision trees, and/or neural networks. The model may be trained on historical data, learning patterns, and/or relationships between input features and the target outcomes. During this training process, the system may adjust the model parameters to minimize prediction errors. After training, the system may validate the model and test the model using separate data sets to ensure the model has a predetermined and/or threshold accuracy and generalizability.

In some embodiments, the system may use specialized predictions based on the task. Additionally or alternatively, the system may adjust the inputs and/or outputs based on the determinations and/or predictions required. For example, for credit card eligibility, the model may evaluate the applicant's likelihood of defaulting on payments. In fraud detection, the model may identify anomalies and patterns indicative of fraudulent behavior. In auto-finance rate determination, the model may predict the risk associated with lending to an individual and adjusts the interest rates accordingly. In some embodiments, the entire process may be iterative, with models continually updated and refined as new data becomes available, ensuring they remain effective in making accurate and reliable predictions.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API platforms and their modules. API layer 350 may use a developer portal. API layer 350 may use strong security constraints applying WAF and DDoS protection, and API layer 350 may use RESTful APIs as standard for external integration.

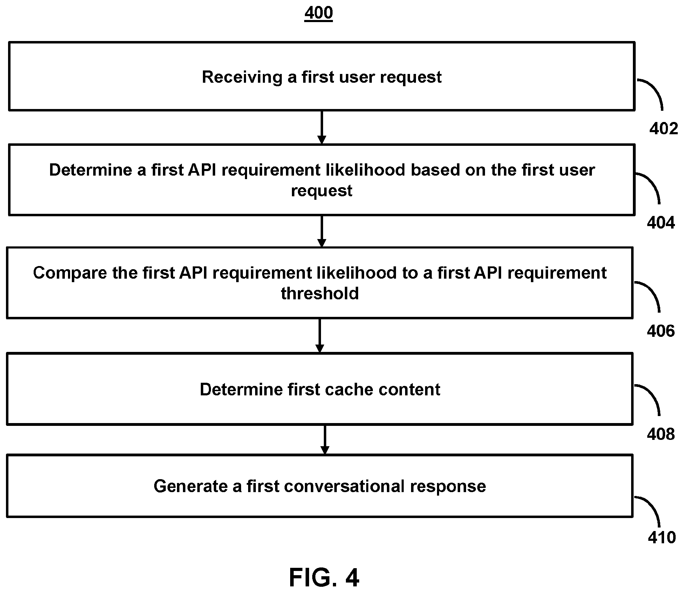

FIG. 4 shows a flowchart of the steps involved in limiting API processing calls during conversational interactions, in accordance with one or more embodiments. For example, the system may use process 400 (e.g., as implemented on one or more system components described above) in order to mitigate data leakage due to API processing calls across a computer network by locally-implemented conversational agents. In another example, the system may use process 400 (e.g., as implemented on one or more system components described above) in order to reduce reliance on API data processing calls across a computer network by locally-implemented conversational agents.

At step 402, process 400 (e.g., using one or more components described above) receives a first user request. For example, the system may receive, via a user interface, a first user request comprising a first utterance for processing. The system may receive, via a user interface implemented on a local device, a first user request comprising a first utterance by allowing the user to input natural language text or speech through interactive elements such as a text box, microphone, or touchscreen prompt. This user interface, which may be part of a web application, mobile app, or desktop software, serves as the initial point of interaction between the user and the system. When the user submits a query-such as typing "Find a flight from NYC to SFO" or speaking a similar command-the interface captures the utterance and transmits it to the system's backend for interpretation and processing. This utterance, referred to as the first user request, is then parsed and analyzed by the system to determine its intent and extract relevant parameters. The design of the user interface is crucial to ensuring that the submission process is seamless and intuitive, thereby enabling the system to effectively receive and respond to user needs in real time. The captured utterance becomes the foundation upon which the system builds its subsequent planning and decision-making actions.

At step 404, process 400 (e.g., using one or more components described above) determines a first API requirement likelihood based on the first user request. For example, the system may determine a first API requirement likelihood based on the first user request, wherein the first API requirement likelihood indicates a likelihood that an API call and response cycle is required to respond to a received user request. The system may determine a first API requirement likelihood based on the first user request by analyzing the content, structure, and context of the initial utterance to assess how likely it is that fulfilling the request will necessitate an external API call and response cycle. This process typically involves the use of a trained AI model, such as a natural language understanding (NLU) component or a machine learning classifier, which evaluates various features of the user input-such as keywords, intent, specificity, and missing information. For example, if a user asks for live data like current flight availability, weather conditions, or real-time stock prices, the model may assign a high API requirement likelihood, since such data is not typically stored locally. Conversely, if the request can be answered using cached information or internal logic, the likelihood score would be lower. This score quantifies the necessity of accessing external services and helps the system make an informed decision about whether to proceed with an API call. By assigning and interpreting this likelihood, the system can manage resources efficiently, reduce unnecessary API traffic, and maintain responsiveness and reliability in delivering accurate results to the user.

At step 406, process 400 (e.g., using one or more components described above) compares the first API requirement likelihood to a first API requirement threshold. For example, the system may compare the first API requirement likelihood to a first API requirement threshold to determine whether to issue one or more API calls to respond to the first user request. The system may compare the first API requirement likelihood to a first API requirement threshold as a decision-making mechanism to determine whether issuing one or more API calls is necessary to respond to a user's initial request. After calculating the first API requirement likelihood-a numerical score representing the probability that an external data fetch is needed-the system evaluates this score against a predefined threshold value. This threshold acts as a cutoff point, calibrated to balance system efficiency with response accuracy. If the likelihood score meets or exceeds the threshold, the system interprets this as sufficient justification to initiate one or more API calls to external services or databases. On the other hand, if the score falls below the threshold, the system may opt to use cached data, rely on internal logic, request more information from the user, or delay the API call until it is more certain that external data is required. This threshold-based comparison enables the system to make intelligent, context-sensitive decisions that reduce unnecessary network traffic, conserve computing resources, and maintain service responsiveness while still fulfilling user intent accurately.

In some embodiments, the system may determine the first API requirement threshold by determining a maximum cache size for the memory cache, determining an amount of the maximum cache size remaining, and adjusting the first API requirement threshold based on the amount of the maximum cache size remaining. For example, the system may determine the first API requirement threshold dynamically by incorporating memory cache availability as a key factor in its decision-making process. To do this, the system first establishes a maximum cache size, which defines the total capacity allocated for storing previously retrieved data. It then continuously monitors the amount of cache space remaining by tracking the volume of data currently stored versus the maximum limit. Based on the remaining cache capacity, the system adjusts the first API requirement threshold to optimize resource utilization and performance. For instance, if a significant portion of the cache is still available, the system may lower the threshold, thereby allowing more API calls to be made and more data to be cached for future reuse. Conversely, if the cache is nearing its capacity, the system may raise the threshold, making it less likely to issue additional API calls unless absolutely necessary. This adaptive approach enables the system to balance the benefits of caching with the limitations of storage, ensuring that external API requests are made judiciously and that the cache is used efficiently to maintain system responsiveness and stability.

In some embodiments, the system may determine the first API requirement threshold by determining an API issuance frequency from the local device and adjusting the first API requirement threshold based on the API issuance frequency. For example, the system may determine the first API requirement threshold by analyzing the API issuance frequency from the local device and adjusting the threshold accordingly to manage resource usage and maintain system performance. API issuance frequency refers to how often the system has made API calls within a given time frame. By monitoring this metric, the system can infer current usage patterns and adjust the threshold for triggering new API calls in response to user requests. For example, if the API call frequency is high-indicating that many requests have recently been made-the system may raise the first API requirement threshold to reduce the likelihood of initiating further external calls. This helps prevent excessive network traffic, avoids breaching rate limits imposed by external services, and reduces the risk of system overload. On the other hand, if the API issuance frequency is low, the system may lower the threshold, allowing more flexibility to issue calls when needed. This dynamic adjustment ensures that API usage remains balanced and efficient over time, promoting stability and responsiveness while preserving access to essential data and services.

In some embodiments, the system may determine the first API requirement threshold by determining a first domain for the first user request and determining the first API requirement likelihood based on the first domain. For example, the system may determine the first API requirement threshold by first identifying the domain associated with the user's request and then tailoring the threshold based on domain-specific characteristics. To begin, the system analyzes the content and context of the first user request to classify it into a specific domain-such as travel, weather, finance, healthcare, or entertainment. Each domain may have different data availability, caching feasibility, response time expectations, and API rate limitations. Once the system determines the relevant domain, it uses this information to adjust the first API requirement threshold accordingly. For example, in a travel domain where real-time availability and pricing data are frequently required, the system may apply a lower threshold to more readily trigger API calls. In contrast, for domains where data changes infrequently-such as historical finance or public encyclopedia queries-the system may raise the threshold to encourage reliance on cached or internal data. This domain-aware approach enables the system to make intelligent, context-sensitive decisions that optimize performance and relevance while minimizing unnecessary external API usage.

In some embodiments, the system may determine the first API requirement threshold by determining a first potential context of the first utterance, determining a first confidence for the first potential context, and comparing the first confidence for the first potential context to a first threshold context confidence to determine the first API requirement likelihood. For example, the system may determine the first API requirement threshold by first identifying the potential context of the user's initial utterance and then evaluating its confidence in that contextual interpretation. Upon receiving the first user request, the system uses natural language processing and machine learning models to infer the most likely context or scenario the utterance pertains to-for example, booking travel, checking weather, or retrieving local news. This inferred context, known as the first potential context, is associated with a confidence score that reflects how certain the system is about the classification. The system then compares this confidence score to a predefined context confidence threshold to assess the reliability of the context inference. If the confidence score exceeds the threshold, the system considers the context classification strong enough to influence the first API requirement likelihood. In this case, the system may adjust the API requirement likelihood upward if the identified context typically requires real-time data or downward if the context generally involves static or cached information. This process allows the system to make a more nuanced and accurate decision about whether to proceed with an API call, reducing unnecessary data requests while ensuring the user's needs are effectively met.

In some embodiments, the system may determine the first API requirement threshold by determining a first labeled reply for the first utterance and determining a required confidence for the first labeled reply. For example, the system may determine the first API requirement threshold by identifying a first labeled reply for the user's initial utterance and assessing the level of confidence needed to justify that reply. When a user submits an utterance, the system processes it using an AI model-such as a classifier or sequence-to-sequence model-to generate a labeled reply, which represents the system's intended response or action type (e.g., providing weather details, suggesting flights, or confirming a booking). Along with this labeled reply, the system calculates a confidence score that reflects how certain it is that the reply accurately addresses the user's intent. To determine whether an API call is needed, the system compares this confidence score against a predefined required confidence level specific to that type of reply. If the confidence score meets or exceeds the required confidence threshold, and the reply necessitates real-time or external data, the system proceeds to calculate a high first API requirement likelihood and may trigger the corresponding API call. If the score falls below the threshold, the system may hold off on issuing the API call, instead opting to seek clarification or rely on cached data. This approach ensures that API calls are only initiated when the system is sufficiently confident in its understanding of the user's needs, thereby enhancing efficiency and reducing unnecessary interactions with external services.

In some embodiments, the system may determine the first API requirement threshold by determining a first response plan for the first conversational response, evaluating the first response plan, and determining the first API requirement likelihood based on evaluating the first response plan. For example, the system may determine the first API requirement threshold by first generating a response plan that outlines the sequence of actions needed to fulfill the user's initial utterance, and then evaluating this plan to assess the likelihood that an external API call is necessary. The response plan may include tool calls, data retrieval steps, conditional logic, and fallback options, depending on the complexity of the request. Once the plan is generated, the system evaluates it to identify whether any steps explicitly depend on external data sources-such as calling a flight database, weather service, or financial API. If the plan contains actions that cannot be completed without up-to-date information from these sources, the system infers a higher likelihood that an API call will be required. This evaluation forms the basis of the first API requirement likelihood. The system then compares this likelihood to the predefined first API requirement threshold to decide whether to proceed with the API call. This method enables the system to make a data-driven, context-aware decision about external data access based on a structured and forward-looking assessment of its planned response, thereby enhancing efficiency and ensuring that API resources are only used when genuinely needed.

In some embodiments, the system may determine the first API requirement threshold by determining a first domain for the first user request, retrieving a response template for the first domain, and determining the first API requirement likelihood based on the response template. For example, the system may determine the first API requirement threshold by identifying the domain of the first user request, retrieving a response template associated with that domain, and using the structure and requirements of the template to assess the likelihood that an API call is needed. When a user submits an utterance, the system analyzes it to classify the request into a specific domain-such as travel, healthcare, finance, or entertainment-based on its language and context. Each domain has predefined response templates that outline typical response formats, required data elements, and the expected logic needed to complete a response. By retrieving the relevant response template for the identified domain, the system can assess whether the expected response relies on dynamic, real-time data or can be fulfilled using cached or static content. For instance, a travel template might require current flight availability, implying a high likelihood of needing an API call, whereas a template for historical data may rely solely on internal resources. Based on this assessment, the system calculates the first API requirement likelihood and compares it against the first API requirement threshold to determine whether issuing an external API call is justified. This approach allows the system to make domain-sensitive, template-guided decisions that improve response accuracy while minimizing unnecessary reliance on external services.

In some embodiments, the system may determine the first API requirement threshold by determining a first domain for the first user request, determining an amount of available data on the local device corresponding to the first domain, and determining the first API requirement likelihood based on the amount of available data. For example, the system may determine the first API requirement threshold by first identifying the domain associated with the user's initial request and then evaluating the quantity of relevant data available locally for that domain. Upon receiving the request, the system classifies it into a specific domain-such as healthcare, travel, or finance-based on linguistic patterns, keywords, and contextual cues. Once the domain is established, the system checks the local device or memory cache to assess the availability and completeness of relevant data corresponding to that domain. This may include previously retrieved information, static datasets, or recently cached API responses. If the system finds that a sufficient amount of accurate and up-to-date domain-specific data is already stored locally, it calculates a low first API requirement likelihood, indicating that the response can likely be generated without invoking an external API. Conversely, if the available local data is sparse, outdated, or incomplete, the system assigns a higher likelihood that an API call will be necessary to fulfill the user's request. This calculated likelihood is then compared to a predefined first API requirement threshold to determine whether to proceed with an API call. By integrating local data availability into its thresholding logic, the system reduces unnecessary network activity, optimizes performance, and ensures relevant, contextually rich responses.

In another example, the system may determine a first API data security confidence based on the first user request, compare the first API data security confidence to a first API data security threshold, and in response to determining that the first API data security confidence does not correspond to the first API data security threshold, determine first cache content based on the first utterance and storing the first cache content in a memory cache. For example, the system may determine a first API data security confidence by analyzing the sensitivity and privacy requirements of the data implied by the first user request. This involves examining the content of the user's utterance to identify whether the request pertains to potentially sensitive information-such as personal identifiers, financial details, health records, or location data-that may pose security or privacy risks if transmitted externally. Based on this analysis, the system assigns a data security confidence score indicating how safely the requested data can be handled via an API call to an external service. The system then compares this score to a predefined API data security threshold, which represents the minimum acceptable confidence level for transmitting data securely to external endpoints. If the data security confidence score falls below this threshold-suggesting that the data may be too sensitive or the external service insufficiently secure-the system refrains from initiating the API call. Instead, it determines an appropriate response using locally available information or logic, identifies the relevant content that can be safely processed, and stores this first cache content in a memory cache. This cached data may then be reused or refined through internal tools to continue the interaction without compromising user privacy or data integrity. This mechanism allows the system to maintain secure, privacy-conscious behavior while still providing useful and contextually appropriate responses.

In some embodiments, the system may determine the first API data security confidence based on the first user request by determining a first text string in the first utterance and determining the first API data security confidence based on the first text string. For example, the system may determine the first API data security confidence based on the first user request by analyzing specific text content within the user's initial utterance. This process begins by extracting a first text string from the utterance-typically a phrase or set of keywords that suggest the nature and sensitivity of the requested information. For example, terms such as "social security number," "bank account," "medical history," or "confidential client data" may indicate a high level of sensitivity. The system then evaluates this text string using predefined rules, security classification models, or machine learning classifiers trained to detect sensitive or private information. Based on this evaluation, the system assigns a data security confidence score, which reflects how securely the data involved in the request can be transmitted or processed via an external API. A lower confidence score indicates higher sensitivity and greater risk, suggesting that the system should avoid making an API call unless strong data protection measures are in place. Conversely, a higher score implies that the data is low-risk and can be safely used in external communication. By focusing on the content of the user's language, the system can make intelligent, real-time decisions that prioritize data security while maintaining the functionality of the interaction.

In some embodiments, the system may determine the first API data security confidence based on the first user request by determining whether the first utterance comprises user identifiable information and determining the first API data security confidence based on whether the first utterance comprises the user identifiable information. For example, the system may determine the first API data security confidence based on the first user request by analyzing whether the initial utterance contains user identifiable information (UII), such as names, email addresses, phone numbers, account numbers, or other personally identifiable details. Upon receiving the first utterance, the system uses pattern recognition techniques, regular expressions, or trained machine learning models to detect the presence of such sensitive information within the input. If the system identifies UII in the utterance, it assigns a lower API data security confidence score, reflecting the increased risk associated with transmitting sensitive data to external services via an API call. Conversely, if the utterance does not contain any identifiable user data, the system assigns a higher confidence score, indicating a lower security risk. This confidence score is then compared against a predefined data security threshold to determine whether it is appropriate to proceed with an API call. If the score falls below the threshold, the system may choose alternative actions, such as retrieving data from a local cache or requesting user consent. This approach allows the system to proactively safeguard user privacy by factoring in the presence of identifiable information before exposing any data to external systems.

In some embodiments, the system may compare the first API data security confidence to the first API data security threshold by determining a security protocol used to issue one or more API calls to respond to received user requests and determining the first API data security threshold based on the security protocol. The system may compare the first API data security confidence to the first API data security threshold by first identifying the security protocol that would be used to issue the API calls required to fulfill the user's request. This protocol could include transport layer security (TLS), OAuth authentication, data encryption standards, or other protective measures employed by the external service or API endpoint. Once the system determines the specific security protocol in place, it evaluates the robustness and reliability of that protocol to establish a corresponding API data security threshold. For instance, if the API uses a high-assurance protocol with end-to-end encryption and strong authentication mechanisms, the system may set a lower threshold, allowing more requests to proceed even when moderate data sensitivity is involved. Conversely, if the protocol is weaker or lacks full encryption, the system may set a higher threshold to limit data exposure. The system then compares the calculated first API data security confidence-based on the user's input and potential sensitivity of the data-to this protocol-based threshold. If the confidence score meets or exceeds the threshold, the system proceeds with the API call; if not, it may opt for alternative actions such as using cached data or requesting user confirmation. This comparison ensures that API interactions are governed not only by the content of the user's request but also by the trustworthiness of the communication channel, resulting in a more secure and privacy-conscious system behavior.

In some embodiments, the system may compare the first API data security confidence to the first API data security threshold by determining a security level defined by the first user request and determining the first API data security threshold based on the security level. For example, the system may compare the first API data security confidence to the first API data security threshold by determining a security level implied or explicitly defined by the user's initial request and adjusting the threshold accordingly. When the system receives the first utterance, it analyzes the content to identify the sensitivity of the data involved or any user-specified preferences regarding privacy and security. This could include detecting keywords or phrases that indicate a need for confidentiality (e.g., "private," "secure," or "confidential") or recognizing that the request pertains to inherently sensitive information, such as financial records, personal health data, or legal documents. Based on this analysis, the system assigns a security level to the request-such as low, medium, or high-which reflects the degree of protection required for safely handling the data. The system then uses this security level to establish an appropriate API data security threshold: a higher security level results in a stricter threshold, requiring a greater degree of confidence in the safety of the API communication before proceeding. The system compares the previously determined API data security confidence-based on the nature of the user's data-with this threshold. If the confidence meets or exceeds the threshold, the system may proceed with the API call; if it falls short, the system may opt to retrieve data from a secure local cache or delay the call until additional safeguards are in place. This context-aware mechanism helps ensure that the system honors both the implicit and explicit security expectations of the user while responsibly managing external data transmissions.

At step 408, process 400 (e.g., using one or more components described above) determines first cache content. For example, the system may, in response to determining that the first API requirement likelihood does not correspond to the first API requirement threshold, determine first cache content based on the first utterance and storing the first cache content in a memory cache. The system may, in response to determining that the first API requirement likelihood does not correspond to the first API requirement threshold, choose to avoid issuing an API call and instead generate and store relevant cache content based on the first utterance. When the likelihood that an API call is necessary falls below the predefined threshold-indicating that an external request is not justified or optimal at that moment-the system analyzes the user's initial utterance to extract actionable or useful information that can be processed locally. This may include inferred user intent, contextual parameters, partial data inputs, or intermediate representations relevant to the conversation or task at hand. The system then formulates this extracted or derived content as a structured cache entry, known as the first cache content, and stores it in a memory cache. This enables the system to preserve conversational continuity and preparedness for future steps, allowing it to later reuse or refine the cached information if the conversation evolves and an API call becomes warranted. By preemptively caching locally available content, the system ensures responsiveness, reduces redundant processing, and builds a more efficient and context-aware interaction flow, even in the absence of immediate external data retrieval.

At step 410, process 400 (e.g., using one or more components described above) generates a first conversational response. For example, the system may generate for display, in the user interface, a first conversational response. The system may generate a first conversational response for display in the user interface by processing the user's initial utterance through a series of natural language understanding and generation steps. After receiving the input via the user interface, the system analyzes it to identify the user's intent, extract relevant entities or parameters, and determine the appropriate response strategy. This may involve accessing internal knowledge bases, consulting cached data, or planning a set of operations to fulfill the user's request. Once the appropriate response content is prepared-whether it's an answer, clarification question, confirmation, or suggested next action-the system uses a natural language generation module to translate this content into a fluent, contextually appropriate text. The generated response is then formatted for display and sent to the user interface, where it appears as a conversational message. This process ensures that the response is both informative and user-friendly, maintaining the natural flow of interaction while guiding the user through the task or inquiry at hand.

In some embodiments, the system may receive, via the user interface, a second user request comprising a second utterance, retrieve the first cache content from the memory cache, and determine a second API requirement likelihood based on the second user request and the first cache content. For example, the system may receive a second user request comprising a second utterance via the user interface in the same way it processes the initial request-by capturing the input through a text field, voice interface, or another interactive component. Upon receiving this second utterance, the system analyzes it to determine the user's new or refined intent, which may build upon or modify the context established by the first request. The system then retrieves the first cache content previously stored in the memory cache, which may include partial results, inferred user preferences, or relevant contextual data derived from the first utterance. With access to both the new user input and the cached content, the system evaluates whether sufficient information is now available to fulfill the request without relying on external data sources. It does this by computing a second API requirement likelihood-a score reflecting the need for an API call-based on the combination of the second utterance and the cached content. If the cache contains all necessary information to address the request, the likelihood will be low; if gaps remain that require fresh data, the likelihood will increase. This dynamic assessment allows the system to minimize unnecessary API calls while ensuring responsiveness and relevance in the ongoing interaction.

In some embodiments, the system may compare the second API requirement likelihood to the first API requirement threshold, in response to determining that the first API requirement likelihood corresponds to the first API requirement threshold, generate a first API call, receive a first API response in response to the first API call, and generate for display, in the user interface, a second conversational response based on the first API response. For example, the system may compare the second API requirement likelihood to the first API requirement threshold to determine whether executing an external API call is justified based on the updated user request and available contextual data. If the second API requirement likelihood-calculated using the second user utterance and any relevant cached content-meets or exceeds the first API requirement threshold, the system concludes that external data is necessary to fulfill the request. In response to this determination, the system generates a first API call, which includes the necessary parameters derived from the user inputs and cached context. This API call is then issued to the appropriate external service or data source. Upon receiving a first API response, the system processes the returned data-validating its structure, extracting relevant information, and formatting it as needed. The system then uses this processed response to construct a second conversational response, which is tailored to address the user's request in a natural, informative, and context-aware manner. Finally, this second response is rendered for display in the user interface, maintaining the continuity of the conversation and ensuring a smooth, user-friendly experience. This end-to-end process enables the system to efficiently balance data needs, responsiveness, and user satisfaction by selectively invoking external resources only when necessary.

For example, the response may comprise an action plan generated by a planning function, which is an intelligent component within the system designed to interpret user intent and translate it into a structured sequence of steps or tool calls. Upon analyzing the user's utterance-along with any relevant context from previous interactions or cached data-the planning function constructs a coherent action plan aimed at fulfilling the user's request. This plan may include a variety of operations such as API calls, data filtering, content retrieval, or decision branching based on conditional logic. The action plan is generated using a combination of natural language understanding, reasoning algorithms, and, in many cases, large language models capable of autoregressive decoding. Each step in the plan is formulated with specific tools or functions, each responsible for executing part of the process, such as fetching flight data, applying filters, or formatting the final output. Once the plan is evaluated and deemed valid, the system may present it to the user either implicitly through the final response or explicitly as a visible outline of upcoming steps. Including an action plan in the response ensures transparency, traceability, and logical consistency in how the system arrives at and executes its answers, thereby enhancing user trust and system interpretability.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for mitigating data leakage due to application interface programming ("API") processing calls across a computer network by locally-implemented conversational agents and/or reducing reliance on API data processing calls across a computer network by locally-implemented conversational agents.
2. The method of any one of the preceding embodiments, further comprising: receiving, via a user interface, a first user request comprising a first utterance for processing; determining a first API data security confidence based on the first user request; comparing the first API data security confidence to a first API data security threshold; in response to determining that the first API data security confidence does not correspond to the first API data security threshold, determining first cache content based on the first utterance and storing the first cache content in a memory cache; generating for display, in the user interface, a first conversational response; receiving, via the user interface, a second user request comprising a second utterance; retrieving the first cache content from the memory cache; determining a second API data security confidence based on the second user request and the first cache content; comparing the second API data security confidence to the first API data security threshold; in response to determining that the second API data security confidence corresponds to the first API data security threshold, generating a first API call; receiving a first API response in response to the first API call; and generating for display, in the user interface, a second conversational response based on the first API response.
2. The method of any one of the preceding embodiments, wherein determining the first API data security confidence based on the first user request further comprises: determining a first text string in the first utterance; and determining the first API data security confidence based on the first text string.
3. The method of any one of the preceding embodiments, wherein determining the first API data security confidence based on the first user request further comprises: determining whether the first utterance comprises user identifiable information; and determining the first API data security confidence based on whether the first utterance comprises the user identifiable information.
4. The method of any one of the preceding embodiments, wherein comparing the first API data security confidence to the first API data security threshold further comprises: determining a security protocol used to issue one or more API calls to respond to received user requests; and determining the first API data security threshold based on the security protocol.
5. The method of any one of the preceding embodiments, wherein comparing the first API data security confidence to the first API data security threshold further comprises: determining a security level defined by the first user request; and determining the first API data security threshold based on the security level.
6. The method of any one of the preceding embodiments, further comprising: receiving, via a user interface implemented, a first user request comprising a first utterance for processing; determining a first API requirement likelihood based on the first user request, wherein the first API requirement likelihood indicates a likelihood that an API call and response cycle is required to respond to a received user request; comparing the first API requirement likelihood to a first API requirement threshold to determine whether to issue one or more API calls to respond to the first user request; in response to determining that the first API requirement likelihood does not correspond to the first API requirement threshold, determining first cache content based on the first utterance and storing the first cache content in a memory cache; and generating for display, in the user interface, a first conversational response.
7. The method of any one of the preceding embodiments, further comprising: receiving, via the user interface, a second user request comprising a second utterance; retrieving the first cache content from the memory cache; and determining a second API requirement likelihood based on the second user request and the first cache content.
8. The method of any one of the preceding embodiments, further comprising: comparing the second API requirement likelihood to the first API requirement threshold; in response to determining that the first API requirement likelihood corresponds to the first API requirement threshold, generating a first API call; receiving a first API response in response to the first API call; and generating for display, in the user interface, a second conversational response based on the first API response.
9. The method of any one of the preceding embodiments, wherein determining the first API requirement threshold further comprises: determining a maximum cache size for the memory cache; determining an amount of the maximum cache size remaining; and adjusting the first API requirement threshold based on the amount of the maximum cache size remaining.
10. The method of any one of the preceding embodiments, wherein determining the first API requirement threshold further comprises: determining an API issuance frequency from the local device; and adjusting the first API requirement threshold based on the API issuance frequency.
11. The method of any one of the preceding embodiments 6, wherein determining the first API requirement threshold further comprises: determining a first domain for the first user request; and determining the first API requirement likelihood based on the first domain.
12. The method of any one of the preceding embodiments, wherein determining the first API requirement likelihood further comprises: determining a first potential context of the first utterance; determining a first confidence for the first potential context; and comparing the first confidence for the first potential context to a first threshold context confidence to determine the first API requirement likelihood.
13. The method of any one of the preceding embodiments, wherein determining the first API requirement likelihood further comprises: determining a first labeled reply for the first utterance; and determining a required confidence for the first labeled reply.
14. The method of any one of the preceding embodiments, wherein determining the first API requirement likelihood further comprises: determining a first response plan for the first conversational response; evaluating the first response plan; and determining the first API requirement likelihood based on evaluating the first response plan.
15. The method of any one of the preceding embodiments, wherein determining the first API requirement likelihood further comprises: determining a first domain for the first user request; retrieving a response template for the first domain; and determining the first API requirement likelihood based on the response template.
16. The method of any one of the preceding embodiments, wherein determining the first API requirement likelihood further comprises: determining a first domain for the first user request; determining an amount of available data on the local device corresponding to the first domain; and determining the first API requirement likelihood based on the amount of available data.
17. One or more non-transitory, computer-readable mediums storing instructions that, when executed by a data processing apparatus, cause the data processing apparatus to perform operations comprising those of any of embodiments 1-16.
18. A system comprising one or more processors; and memory storing instructions that, when executed by the processors, cause the processors to effectuate operations comprising those of any of embodiments 1-16.
19. A system comprising means for performing any of embodiments 1-16.

## Claims

1. A system for mitigating data leakage due to application interface programming ("API") processing calls across a computer network by locally-implemented conversational agents, the system comprising:
one or more processors; and
one or more non-transitory, computer-readable media, comprising instructions that, when executed by the one or more processors, cause operations comprising:
receiving, via a user interface, a first user request comprising a first utterance for processing;
determining a first API data security confidence based on the first user request;
comparing the first API data security confidence to a first API data security threshold;
in response to determining that the first API data security confidence does not correspond to the first API data security threshold, determining first cache content based on the first utterance and storing the first cache content in a memory cache;
generating for display, in the user interface, a first conversational response;
receiving, via the user interface, a second user request comprising a second utterance;
retrieving the first cache content from the memory cache;
determining a second API data security confidence based on the second user request and the first cache content;
comparing the second API data security confidence to the first API data security threshold;
in response to determining that the second API data security confidence corresponds to the first API data security threshold, generating a first API call;
receiving a first API response in response to the first API call; and
generating for display, in the user interface, a second conversational response based on the first API response.

2. The system of claim 1, wherein determining the first API data security confidence based on the first user request further comprises:
determining a first text string in the first utterance; and
determining the first API data security confidence based on the first text string.

3. The system of claim 1 or 2, wherein determining the first API data security confidence based on the first user request further comprises:
determining whether the first utterance comprises user identifiable information; and
determining the first API data security confidence based on whether the first utterance comprises the user identifiable information.

4. The system of any one of claims 1 to 3, wherein comparing the first API data security confidence to the first API data security threshold further comprises:
determining a security protocol used to issue one or more API calls to respond to received user requests; and
determining the first API data security threshold based on the security protocol.

5. The system of any one of claims 1 to 4, wherein comparing the first API data security confidence to the first API data security threshold further comprises:
determining a security level defined by the first user request; and
determining the first API data security threshold based on the security level.

6. A method for reducing reliance on application interface programming ("API") data processing calls across a computer network by locally-implemented conversational agents, the method comprising:
receiving, via a user interface implemented, a first user request comprising a first utterance for processing;
determining a first API requirement likelihood based on the first user request, wherein the first API requirement likelihood indicates a likelihood that an API call and response cycle is required to respond to a received user request;
comparing the first API requirement likelihood to a first API requirement threshold to determine whether to issue one or more API calls to respond to the first user request;
in response to determining that the first API requirement likelihood does not correspond to the first API requirement threshold, determining first cache content based on the first utterance and storing the first cache content in a memory cache; and
generating for display, in the user interface, a first conversational response.

7. The method of claim 6, further comprising:
receiving, via the user interface, a second user request comprising a second utterance;
retrieving the first cache content from the memory cache; and
determining a second API requirement likelihood based on the second user request and the first cache content.

8. The method of claim 6 or 7, further comprising:
comparing the second API requirement likelihood to the first API requirement threshold;
in response to determining that the first API requirement likelihood corresponds to the first API requirement threshold, generating a first API call;
receiving a first API response in response to the first API call; and
generating for display, in the user interface, a second conversational response based on the first API response.

9. The method of any one of claims 6 to 8, wherein determining the first API requirement threshold further comprises:
determining a maximum cache size for the memory cache;
determining an amount of the maximum cache size remaining; and
adjusting the first API requirement threshold based on the amount of the maximum cache size remaining.

10. The method of any one of claims 6 to 9, wherein determining the first API requirement threshold further comprises:
determining an API issuance frequency; and
adjusting the first API requirement threshold based on the API issuance frequency.

11. The method of any one of claims 6 to 10, wherein determining the first API requirement threshold further comprises:
determining a first domain for the first user request; and
determining the first API requirement likelihood based on the first domain.

12. The method of any one of claims 6 to 11, wherein determining the first API requirement likelihood further comprises one or more of:
(a) determining a first potential context of the first utterance; determining a first confidence for the first potential context; and comparing the first confidence for the first potential context to a first threshold context confidence to determine the first API requirement likelihood;
(b) determining a first labeled reply for the first utterance; and determining a required confidence for the first labeled reply;
(c) determining a first response plan for the first conversational response; evaluating the first response plan; and determining the first API requirement likelihood based on evaluating the first response plan;
(d) determining a first domain for the first user request; retrieving a response template for the first domain; and determining the first API requirement likelihood based on the response template; and
(e) determining a first domain for the first user request; determining an amount of available data on a local device corresponding to the first domain; and determining the first API requirement likelihood based on the amount of available data.

13. One or more non-transitory, computer-readable media, comprising instructions that, when executed by one or more processors, cause operations comprising:
receiving, via a user interface implemented on a local device, a first user request comprising a first utterance for processing;
determining first cache content based on the first utterance;
storing the first cache content in a memory cache;
generating for display, in the user interface, a first conversational response;
receiving, via the user interface, a second user request comprising a second utterance;
retrieving the first cache content from the memory cache;
determining a second API requirement likelihood based on the second user request and the first cache content;
comparing the second API requirement likelihood to a first API requirement threshold;
in response to determining that the second API requirement likelihood corresponds to the first API requirement threshold, generating a first API call;
receiving a first API response in response to the first API call; and
generating for display, in the user interface, a second conversational response based on the first API response.

14. The one or more non-transitory, computer-readable media of claim 13, wherein the instructions further cause operations comprising:
determining a first API requirement likelihood based on the first user request, wherein the first API requirement likelihood indicates a likelihood that an API call and response cycle is required to respond to a received user request;
comparing the first API requirement likelihood to the first API requirement threshold; and
in response to determining that the first API requirement likelihood does not correspond to the first API requirement threshold, determining to cache the first cache content.

15. The one or more non-transitory, computer-readable media of claim 14, wherein determining the first API requirement likelihood further comprises one of both of:
(a) determining a first domain for the first user request; retrieving a response template for the first domain; and determining the first API requirement likelihood based on the response template; and
(b) determining a first domain for the first user request; determining an amount of available data on the local device corresponding to the first domain; and determining the first API requirement likelihood based on the amount of available data.
